# EUROPEAN PATENT APPLICATION

(11) **EP 4 492 544 A1**
(43) Date of publication of application: **15.01.2025**
(21) Application number: 24183221.1
(22) Date of filing: 19.06.2024
(51) Int. Cl.: H01M 50/147, H01M 50/188, H01M 50/55, H01M 50/566, H01M 50/552

(54) **END COVER ASSEMBLY, BATTERY, ENERGY STORAGE DEVICE, AND ELECTRIC SYSTEM**

(30) Priority: 29.06.2023 CN 202310785692
(71) Applicant: Xiamen Hithium Energy Storage Technology Co., Ltd., Xiamen, Fujian 361100 (CN)
(72) Inventor: XIAO, Hepan, XIAMEN, 361100 (CN)
(74) Representative: DREISS Patentanwälte PartG mbB

(57) **Abstract**

The present disclosure relates to an end cover assembly, a battery, an energy storage device, and an electric system. The end cover assembly includes a top cover unit, a pole, an upper plastic, and a fixing member. The pole penetrates the top cover unit and includes a base portion and a connecting portion. The connecting portion protrudes from an end surface of the base portion in an axial direction of the base portion, and a part of the end surface of the base portion outside a coverage area of the connecting portion is formed as a step surface surrounding the connecting portion. The upper plastic is at least partially sleeved on a peripheral side of the base portion. The upper plastic is partially located at a side of the top cover unit in a thickness direction of the top cover unit. The fixing member is partially located at the other side of the top cover unit in the thickness direction of the top cover unit. A seam is formed between the fixing member and the connecting portion and surrounds the connecting portion, and the step surface abuts against the fixing member and cover the seam. During welding by using a laser, the laser irradiates through the seam onto the step surface. Through a shielding effect of the step surface, the laser cannot reach the upper plastic member when being irradiated, thereby improving reliability of the whole end cover assembly.

## Description

### FIELD

The present disclosure relates to the field of energy storage technologies, and in particular, to an end cover assembly, a battery, an energy storage device, and an electric system.

### BACKGROUND

A rechargeable battery, also known as a secondary battery or a storage battery, enables active materials to be activated for continued use through recharging after discharge, such that the rechargeable battery gradually becomes a main power source of an electric system due to its recyclable characteristic. The rechargeable battery generally includes an end cover assembly. However, during assembly of the end cover assembly, welding heat will damage other parts in the end cover assembly to cause partial failures, thereby affecting reliability of the whole end cover assembly.

### SUMMARY

One technical problem to be solved by the present disclosure is how to improve reliability of an end cover assembly.

An end cover assembly includes a top cover unit, a pole, an upper plastic member, and a fixing member. The pole penetrates the top cover unit and includes a base portion and a connecting portion. The connecting portion protrudes from an end surface of the base portion in an axial direction of the base portion, and a part of the end surface of the base portion outside a coverage area of the connecting portion is formed as a step surface surrounding the connecting portion. The upper plastic member is at least partially sleeved on a peripheral side of the base portion. The upper plastic member is partially located at a side of the top cover unit in a thickness direction of the top cover unit. The fixing member is partially located at the other side of the top cover unit in the thickness direction of the top cover unit. A seam surrounding the connecting portion is defined between the fixing member and the connecting portion, and the step surface is configured to abut against the fixing member and cover the seam.

In one of embodiments, the pole further includes a boss portion connected to the connecting portion and protruding from an end of the connecting portion away from the base portion. A cross section of the boss portion perpendicular to an axial direction of the pole is smaller than a cross section of the connecting portion perpendicular to the axial direction of the pole. In this way, interference of a welding layer in the seam can be avoided, and a welding connection strength between a connector and the boss portion is improved.

In one of embodiments, the boss portion has a length ranging from 0.1mm to 1mm. In this way, interference generated by a protrusion of the welding layer can be avoided.

In one of embodiments, the cross section of the boss portion perpendicular to the axial direction of the pole has a size gradually decreasing in a direction to an end away from an end of the boss portion close to the connecting portion to an end of the boss portion away from the connecting portion. In this way, demolding of the pole is facilitated.

In one of embodiments, the boss portion is in a circular truncated cone shape. An angle included between a generatrix of the boss portion and a central axis of the boss portion ranges from 5 degrees to 45 degrees. In this way, the demolding of the pole is facilitated.

In one of embodiments, an end surface of the connecting portion close to the boss portion is flush with an end surface of the fixing member close to the boss portion in the axial direction of the pole. In this way, a connection strength between the connecting portion and the fixing member can be improved.

In one of embodiments, the base portion includes a first section and a second section arranged coaxially. A cross section of the first section perpendicular to an axial direction of the pole is greater than a cross section of the second section perpendicular to the axial direction of the pole, and the step surface is located on the second section. The upper plastic member, an outer sleeve, and an inner sleeve. The inner sleeve and the outer sleeve are arranged at two opposite sides of the base ring in a thickness direction of the base ring. The outer sleeve is connected to a peripheral side of the base ring, and the inner sleeve is connected to an inner circumference of the base ring. The first section is stacked on the base ring and sleeved in the outer sleeve. The inner sleeve penetrates the top cover unit and is sleeved on a peripheral side of the second section. The base ring and the top cover unit are stacked on each other. In this way, assembly precision and assembly efficiency between the upper plastic member and the pole can be improved.

In one of embodiments, the end cover assembly further includes a sealing member. The top cover unit includes a cover plate and a lower plastic member. The cover plate is flanked by the lower plastic member and the base ring. The fixing member is stacked on a side of the lower plastic member away from the cover plate in a thickness direction of the lower plastic member. The lower plastic member has a mounting hole formed thereon. The sealing member is at least partially accommodated in the mounting hole. The sealing member is arranged to surround the inner sleeve and abuts against the cover plate and the fixing member. In this way, sealing effect of the end cover assembly can be improved.

In one of embodiments, the top cover unit has a first counter bore and a second counter bore respectively recessed on two opposite surfaces of the top cover unit in the thickness direction of the top cover unit. The base ring is engaged with the first counter bore. The fixing member is engaged with the second counter bore. In this way, assembly precision and assembly efficiency of the base ring and the fixing member can be improved.
In one of embodiments, the upper plastic member has an outer chamfer located at an end of the upper plastic member close to the connecting portion. And the outer chamfer has an angle ranging from 10 degrees to 45 degrees. In this way, assembly efficiency of the upper plastic member can be improved.

A battery includes the end cover assembly according to any one of the above. In this way, reliability of the battery can be improved.

An energy storage device includes at least one battery as described above.

An electric system includes the above energy storage device. One technical effect of one embodiment of the present disclosure is that, given that the base portion has a step surface surrounding the connecting portion, the upper plastic member is at least partially sleeved on the peripheral side of the base portion, the seam is defined between the fixing member and the connecting portion and surrounds the connecting portion, and the step surface abuts against the fixing member and covers the seam. During welding by using a laser, the laser will be irradiated onto the step surface through the seam. The laser cannot irradiate onto the upper plastic member through a shielding effect of the step surface, so that localized functional failure of the upper plastic member due to burning is avoided. Moreover, a normal function of the end cover assembly is prevented from being weakened. Finally, the reliability of the whole end cover assembly is improved.

### BRIEF DESCRIPTION OF THE DRAWINGS

FIG. 1 is a schematic three-dimensional view of an end cover assembly provided by an embodiment.
FIG. 2 is a partially exploded view of the end cover assembly shown in FIG. 1.
FIG. 3 is a three-dimensional cross-sectional view of a cover plate in a top cover group shown in FIG. 1.
FIG. 4 is a three-dimensional cross-sectional view of a lower plastic member in a top cover group shown in FIG. 1.
FIG. 5 is a three-dimensional cross-sectional view of an upper plastic member in a top cover group shown in FIG. 1.
FIG. 6 is a three-dimensional cross-sectional view of an upper pole in a top cover group shown in FIG. 1.
FIG. 7 is a partially planar cross-sectional view of the end cover assembly shown in FIG. 1.
FIG. 8 is a partially three-dimensional cross-sectional view of the end cover assembly shown in FIG. 1.
FIG. 9 is a schematic three-dimensional view of a battery provided by an embodiment.
FIG. 10 is a schematic exploded view of an energy storage device provided by an embodiment.
FIG. 11 is a schematic planar view of an electric system provided by an embodiment.

Reference numerals: end cover assembly 10, top cover unit 100, cover plate 110, first counter bore 111, through hole 112, lower plastic member 120, second counter bore 121, mounting hole 122, upper plastic member 200, base ring 210, outer sleeve 220, inner sleeve 230, outer chamfer 231, fixing member 300, seam 310, pole 400, base portion 410, step surface 411, first section 412, second section 413, connecting portion 420, boss portion 430, sealing member 500, battery 20, energy storage device 30, electric system 40.

### DETAILED DESCRIPTION

In order to clarify the above-mentioned objects, features, and advantages of the present disclosure, specific implementations of the present disclosure are described in detail below in conjunction with the accompanying drawings. In the following description, many specific details are provided to facilitate full understanding of the present disclosure. However, the present disclosure can be implemented in many other ways different from those described herein, and similar improvements can be made by those skilled in the art without contradicting the intent of the present disclosure. Therefore, the present disclosure is not limited by specific embodiments disclosed below.

In the description of the present disclosure, it needs to be understood that, if terms such as "center", "longitudinal", "lateral", "length", "width", "thickness", "over", "below", "front", "back", "left", "right", "vertical", "horizontal", "top", "bottom", "in", "out", "clockwise", "counterclockwise", "axial", "radial", and "circumferential" appear, orientation or positional relationship indicated by these terms is based on the orientation or position relationship shown in the drawings, and is only for the convenience of describing the present disclosure and simplifying the description, rather than indicating or implying that the associated device or element must have a specific orientation, or be constructed and operated in a specific orientation, and therefore cannot be understood as a limitation to the present disclosure.

In addition, if terms such as "first" and "second" appear, the term "first" or "second" is only for descriptive purposes, rather than indicating or implying relative importance or implicitly indicating the number of indicated technical features. Therefore, the features associated with "first" or "second" can explicitly or implicitly include at least one of the features. In the description of the present disclosure, if a term "plurality of' appear, the term "plurality of' means at least two, unless otherwise specifically indicated.

In the present disclosure, unless otherwise clearly specified and limited, if terms such as "install", "connect", "connect to", "fix" and the like appear, the terms may be understood in a broad sense. For example, unless otherwise clearly specified and limited, it may be a fixed connection or a detachable connection or connection as one piece; mechanical connection or electrical connection or communication; direct connection or indirect connection through an intermediate; internal communication of two components or the interaction relationship between two components. For those skilled in the art, the specific meaning of the above-mentioned terms in the present disclosure can be understood according to specific circumstances.

In the present disclosure, unless expressly stipulated and defined otherwise, if descriptions like the first feature "on" or "under" the second feature appear, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

It may be noted that if an element is referred to as being "fixed to" or "disposed on" another element, it may be directly on another element or intervening elements may also exist. If one element is considered to be "connected" to another element, it may be directly connected to another element or intervening elements may be present simultaneously. If present, terms "vertical", "horizontal", "upper", "lower", "left", "right" and similar expressions used herein are for illustrative purposes only and are not intended to be the only implementations.

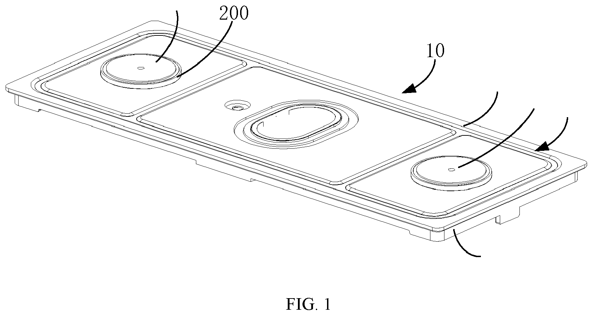

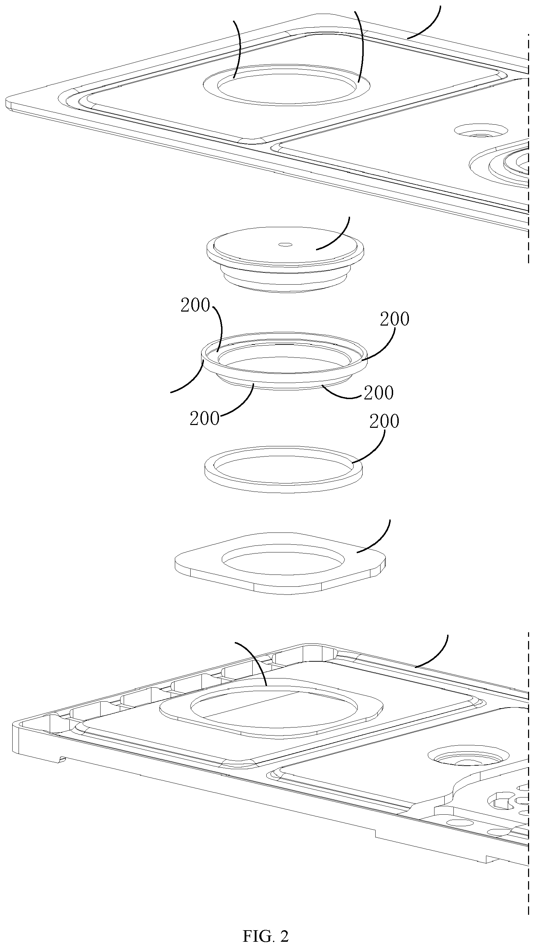

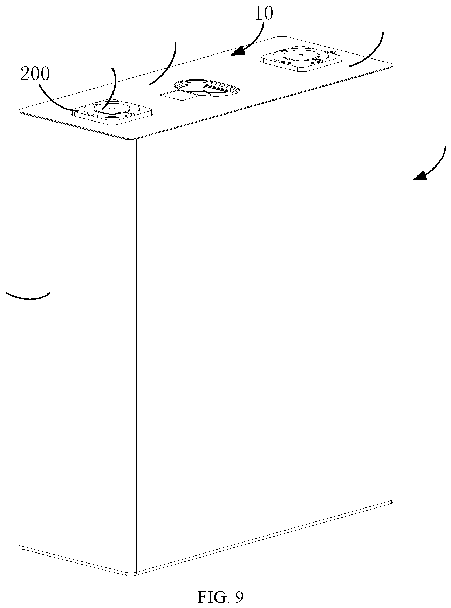

Referring to FIG. 1 and FIG. 2, an end cover assembly 10 provided in an embodiment of the present disclosure is applied to a battery 20 (as shown in FIG. 9). The battery 20 is applied to an energy storage device 30. The energy storage device 30 can be used to store energy. The energy storage device 30 includes at least one battery 20. The end cover assembly 10 includes a top cover unit 100, an upper plastic member 200, a fixing member 300, and a pole 400. The top cover unit 100 may serve as a bearing carrier, so that each of the upper plastic member 200 and the fixing member 300 is arranged on the top cover unit 100, and the pole 400 is sleeved in the upper plastic member 200 and is connected to the fixing member 300 through welding. Moreover, the pole 400 penetrates the top cover unit 100.

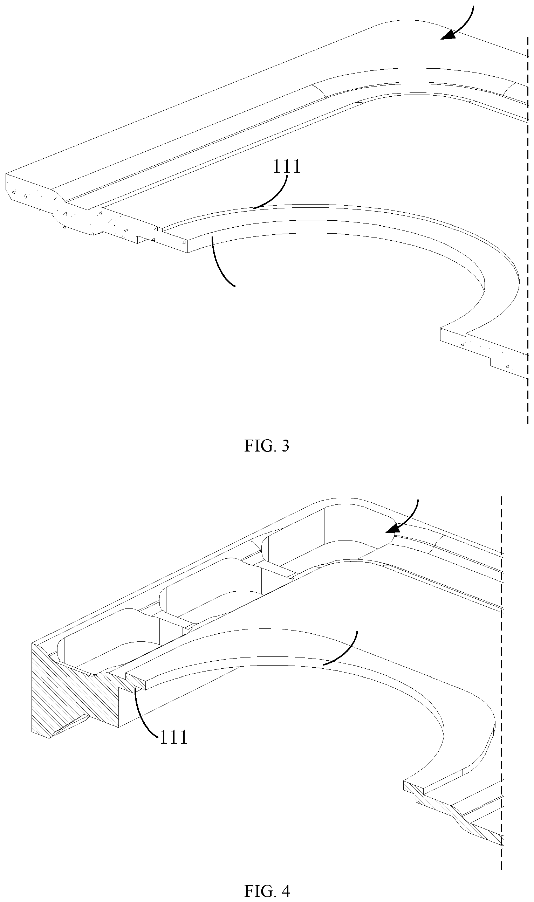

Referring to FIG. 1, FIG. 2, and FIG. 3, in some embodiments, the top cover unit 100 includes a cover plate 110 and a lower plastic member 120. The cover plate 110 and the lower plastic member 120 are stacked on each other. The cover plate 110 may be made of an aluminum material. Obviously, the lower plastic member 120 is made of a plastic material. The cover plate 110 has a first counter bore 111 and a through hole 112 defined thereon. The first counter bore 111 and the through hole 112 are coaxially arranged and in communication with each other. An aperture of the first counter bore 111 is greater than an aperture of the through hole 112. The first counter bore 111 is formed by recessing a surface of the cover plate 110 away from the lower plastic member 120 in a thickness direction of the cover plate 110 by a set depth. The through hole 112 is formed by recessing a middle part of a bottom wall surface of the first counter bore 111 and extends to a surface of the cover plate 110 close to the lower plastic member 120 in the thickness direction of the cover plate 110, such that the through hole 112 has an opening defined on the surface, i.e., the through hole 112 plays a role in penetrating the cover plate 110.

Referring to FIG. 1, FIG. 2, and FIG. 4, in some embodiments, the lower plastic member 120 has a second counter bore 121 and a mounting hole 122 defined therein. Both the second counter bore 121 and the mounting hole 122 are coaxially arranged and in communication with each other. An aperture of the second counter bore 121 is greater than an aperture of the mounting hole 122. The second counter bore 121 is formed by recessing a surface of the lower plastic member 120 away from the cover plate 110 in a thickness direction of the lower plastic member 120 by a set depth. The mounting hole 122 is formed by recessing a middle part of a bottom wall surface of the second counter bore 121 and extends to a surface of the lower plastic member 120 close to the cover plate 110 in the thickness direction of the lower plastic member 120, so that the mounting hole 122 has an opening formed on the surface, i.e., the mounting hole 122 plays a role in penetrating the lower plastic member 120.

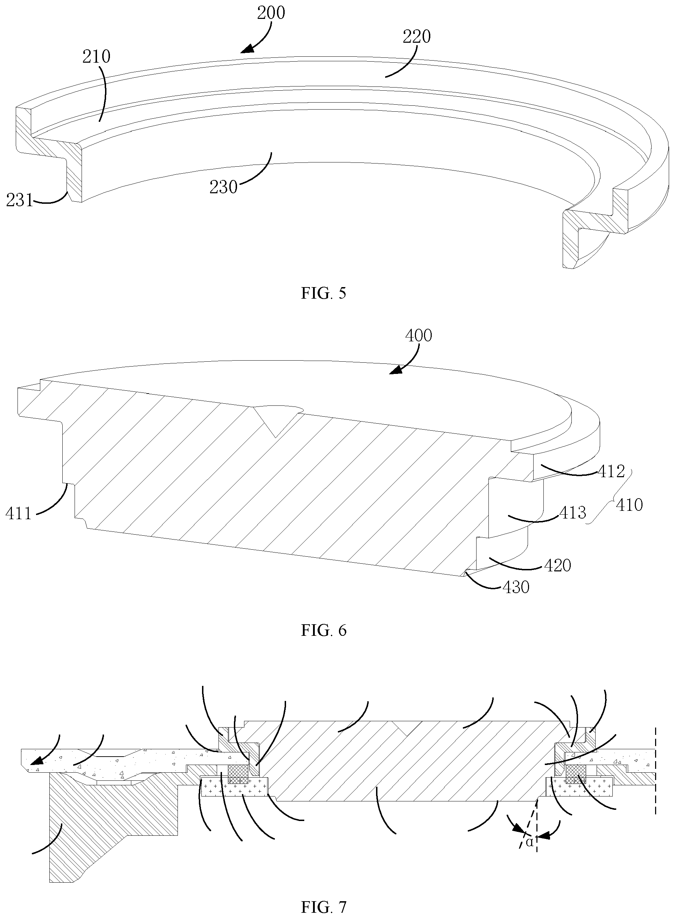

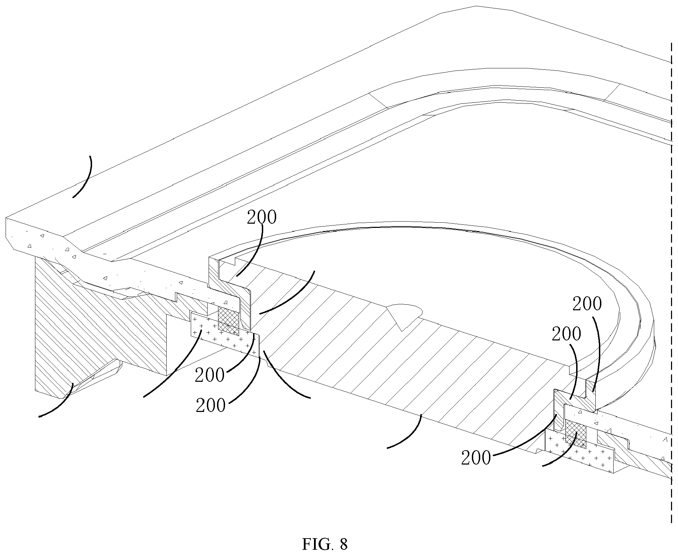

Referring to FIG. 7 and FIG. 8, when the cover plate 110 and the lower plastic member 120 are stacked on each other, the first counter bore 111, the through hole 112, the mounting hole 122, and the second counter bore 121 are sequentially arranged in a thickness direction of the entire end cover assembly 10, and the first counter bore 111, the through hole 112, the mounting hole 122, and the second counter bore 121 are in communication with each other, such that the pole 400 can pass through the first counter bore 111, the through hole 112, the mounting hole 122, and the second counter bore 121 simultaneously.

Referring to FIG. 2 and FIG. 5, in some embodiments, the upper plastic member 200 is made of a plastic material and includes a base ring 210, an outer sleeve 220, and an inner sleeve 230. The base ring 210 may be of an annular structure and is horizontally disposed. Each of the outer sleeve 220 and the inner sleeve 230 may be of a cylindrical structure and vertically arranged. The inner sleeve 230 and the outer sleeve 220 are arranged at two opposite sides of the base ring 210 in a thickness direction of the base ring 210, and the outer sleeve 220 is connected to a peripheral side of the base ring 210, so that the outer sleeve 220 surrounds the base ring 210 and extends towards a side in the thickness direction of the base ring 210 by a set length. Obviously, the outer sleeve 220 protrudes from the base ring 210 by a set length. The inner sleeve 230 is connected to the peripheral side of the base ring 210, so that the base ring 210 is arranged surrounding the inner sleeve 230, and the inner sleeve 230 extends towards the other side in the thickness direction of the base ring 210 by a set length. Obviously, the inner sleeve 230 also protrudes from the base ring 210 by a set length.

Referring to FIG. 5, FIG. 7, and FIG. 8, during mounting of the upper plastic member 200, the inner sleeve 230 may penetrate the through hole 112, and the inner sleeve 230 may form an interference fit relationship with the through hole 112. The base ring 210 is at least partially accommodated in the first counter bore 111 and abuts against a non-recessed edge part of the bottom wall surface of the first counter bore 111, i.e., the base ring 210 is stacked on the bottom wall surface of the first counter bore 111, so that the bottom wall surface of the first counter bore 111 achieves a good position-limiting effect on the entire upper plastic member 200 in a vertical direction to. Moreover, a side wall surface of the first counter bore 111 can also play a good position-limiting effect on the upper plastic member 200 in a horizontal direction. In this way, mounting efficiency and mounting precision of the upper plastic member 200 are improved. It can be understood that the vertical direction may also be understood as the thickness direction of the entire end cover assembly 10. When the inner sleeve 230 is engaged with the through hole 112, a free end of the inner sleeve 230 may also extend in the mounting hole 122 of the lower plastic member 120. In addition, the aperture of the mounting hole 122 is greater than an outer diameter of the inner sleeve 230, so that there will be a large distance between the inner sleeve 230 and a side wall surface of the mounting hole 122. Obviously, after the upper plastic member 200 is mounted, the outer sleeve 220 may be at least partially located outside the first counter bore 111. Apart of the outer sleeve 220 located outside the first counter bore 111 can be understood as that a part of the outer sleeve 220 is located at a side of top cover unit 100 in a thickness direction of the top cover unit 100. In some embodiments, an end of the inner sleeve 230 away from the base ring 210 is a free end. The free end has an outer chamfer 231 located thereon, and the outer chamfer 231 may be an externally outer chamfer. An angle of the outer chamfer 231 ranges from 10 degrees to 45 degrees. For example, a specific value of an angle of the outer chamfer 231 may be 10 degrees, 35 degrees, or 45 degrees. By providing the outer chamfer 231, on the one hand, during an engagement between the inner sleeve 230 and the through hole 112, the outer chamfer 231 can play a good guiding role, which enables the inner sleeve 230 to smoothly penetrate the through hole 112 to be engaged with the through hole 112. In this way, assembly difficulty of the upper plastic member 200 can be lowered, thereby improving assembly efficiency of the upper plastic member 200 on the cover plate 110. On the other hand, a scraping force generated between the inner sleeve 230 and the cover plate 110 during assembly of the inner sleeve 230 can be reduced, so that the inner sleeve 230 is prevented from generating excessive plastic debris under the action of the scraping force, thereby preventing the debris from affecting normal use functions of the end cover assembly 10 and the battery 20. Moreover, an influence of the inner sleeve 230 on a structural strength due to scraping is also avoided.

Referring to FIG. 5, FIG. 7, and FIG. 8, in some embodiments, the fixing member 300 may also be of a ring-shaped structure and made of a metal material. The fixing member 300 is at least partially accommodated in the second counter bore 121 of the lower plastic member 120, such that a part of the fixing member 300 is located at the other side of the top cover unit 100 opposite to the upper plastic member 200 in the thickness direction of the top cover unit 100, and the fixing member 300 abuts against a non-recessed edge part of the bottom wall surface of the second counter bore 121, i.e., the fixing member 300 is stacked on the bottom wall surface of the second counter bore 121, so that the bottom wall of the second counter bore 121 has a good position-limiting effect on the entire fixing member 300 in the vertical direction, and a side wall surface of the second counter bore 121 may also play a good position-limiting effect on the fixing member 300 in the horizontal direction. In this way, mounting efficiency and mounting precision of the fixing member 300 are improved. After the fixing member 300 is accommodated in the second counter bore 121, a part of the lower plastic member 120 is flanked by the fixing member 300 and the cover plate 110, so that the fixing member 300 and the cover plate 110 achieve a partially covering effect on two opposite ends of the mounting hole 122 of the lower plastic member 120.

Referring to FIG. 6, FIG. 7, and FIG. 8, in some embodiments, the pole 400 includes a base portion 410 and a connecting portion 420. Both the base portion 410 and the connecting portion 420 are coaxially arranged. A cross section of the connecting portion 420 is smaller than a cross-sectional size of the base portion 410. The connecting portion 420 protrudes from an end surface of the base portion 410 in an axial direction of the base portion 410. An edge part of the end surface is uncovered by the connecting portion 420, i.e., the edge part of the end surface is located outside a covering range of the connecting portion 420, so that the edge part of the end surface forms a step surface 411 arranged to surround the connecting portion 420. The upper plastic member 200 is sleeved on a peripheral side of the base portion 410. The fixing member 300 is sleeved outside the connecting portion 420. Moreover, the fixing member 300 abuts against the step surface 411.

The base portion 410 includes a first section 412 and a second section 413, the first section 412 and the second section 413 are coaxially arranged. Across section of the first section 412 perpendicular to an axial direction of the pole 400 is greater than a cross section of the second section 413 perpendicular to the axial direction of the pole 400. The second section 413 has an end connected to the first section 412 and another end connected to the connecting portion 420, so that the second section 413 is connected between the first section 412 and the connecting portion 420, and the step surface 411 is located on the second section 413. After the pole 400 is assembled with the upper plastic member 200, the outer sleeve 220 of the upper plastic member 200 is sleeved on the first section 412, the inner sleeve 230 of the upper plastic member 200 is sleeved on the second section 413, and the base ring 210 of the upper plastic member 200 is stacked on the first section 412 in a thickness direction of the end cover assembly 10. Therefore, the base ring 210 has a good position-limiting effect on the pole 400 in the vertical direction, and each of the inner sleeve 230 and the outer sleeve 220 has a good position-limiting effect on the pole 400 in the horizontal direction. In this way, assembly efficiency and assembly precision between the pole 400 and the upper plastic member 200 can be improved. After the assembly between the upper plastic member 200 and the pole 400 is completed, the base ring 210 of the upper plastic member 200 is flanked by the cover 110 and the first section 412 of the pole 400.

In response to the fixing member 300 being sleeved on a peripheral side of the connecting portion 420, an annular seam 310 is defined between the fixing member 300 and the connecting portion 420. Obviously, the seam 310 surrounds the connecting portion 420. In response to the fixing member 300 being needed to be welded and connected to the connecting portion 420, laser welding can be used to perform the welding connection. The laser is irradiated into the seam 310, so that a part of the fixing member 300 and the connecting portion 420 close to the seam 310 generates a molten liquid, and the molten liquid is solidified to form a welding layer after cooling. Therefore, the fixing member 300 and the connecting portion 420 are made welded to each other. Given that the fixing member 300 abuts against the step surface 411 of the pole 400, mounting precision of the fixing member 300 can be improved, and a precision requirement of the fixing member 300 for a welding fixture during welding can be lowered.

For the end cover assembly 10 in the above embodiments, given that the cross section of the second section 413 is greater than the cross section of the connecting portion 420, the second section 413 has a step surface 411 arranged to surround the connecting portion 420, and the step surface 411 abuts against the fixing member 300 and achieves a covering effect on the seam 310. Given that the inner sleeve 230 of the upper plastic member 200 is sleeved on a peripheral side of the second section 413, the fixing member 300 is sleeved on the peripheral side of the connecting portion 420, and the step surface 411 plays a covering effect on the seam 310. During welding by using the laser, the laser will be irradiated onto the step surface 411 through the seam 310. Moreover, under the shielding effect of the step surface 411, the laser cannot irradiate the inner sleeve 230, thereby preventing the occurrence of functional failures of the local part of the inner sleeve 230 due to burning, preventing the normal function of the end cover assembly 10 from being weakened, and finally improving the reliability of the whole end cover assembly 10. In other embodiments of the present disclosure, because of the occurrence of a distance between the inner sleeve 230 and the seam 310 between the fixing member 300 and the connecting portion 420 in the horizontal direction, a predetermined dislocation is maintained between the inner sleeve 230 and the seam 310 between the fixing member 300 and the connecting portion 420, which effectively prevents the inner sleeve 230 from being located directly above the seam 310, and further prevents the laser from irradiating onto the inner sleeve 230.

Referring to FIG. 6, FIG. 7, and FIG. 8, in some embodiments, the pole 400 further includes a boss portion 430. The boss portion 430 and the connecting portion 420 are coaxially arranged. A size of a cross-section of the boss portion 430 is smaller than a size of a cross-section of the connecting portion 420. The above cross sections are both cross sections perpendicular to the axial direction of the pole 400. The boss portion 430 protrudes from an end surface of the connecting portion 420 away from the base portion 410. Obviously, the boss portion 430 and the connecting portion 420 are connected to form a stepped structure. A connector is welded to an end surface of the boss portion 430 away from the connecting portion 420. End surfaces of each of the connecting portion 420 and the fixing member 300 close to the boss portion 430 are flush with each other, so that the molten liquid during laser welding covers edge parts of the two end surfaces close to the seam 310 simultaneously, thereby enhancing a connection strength between the connecting portion 420 and the fixing member 300.

For the end cover assembly 10 in the above embodiments, by arranging the boss portion 430 protruding from the end surface of the connecting portion 420, the connector is effectively prevented from being welded onto the end surface of the connecting portion 420, so that a welding position of the connector is transferred to the end surface of the boss portion 430 from the end surface of the connecting portion 420. Therefore, the connector located on the end surface of the boss portion 430 keeps a predetermined distance from a protrusion of the welding layer on the end surface of the connecting portion 420, thereby preventing the protrusion of the welding layer from forming a jacking effect on the connector, i.e., eliminating interference generated by the protrusion of the welding layer, and ensuring that the connector is always tightly attached to the protruding end surface. Therefore, during the welding of the connector and the boss portion 430, given that the connector is always tightly attached to the protruding end surface, the width of fusion and the depth of fusion of the welding of the connector are effectively improved, thereby improving the connection strength between the connector and the boss portion 430 after the welding between the connector and the boss portion 430, and making an improvement in the contact area of the connector and the boss portion 430 to enhance the overcurrent capacity. In response to the end cover assembly 10 being applied to the battery 20, heat gathered by the battery 20 during charging and discharging can be effectively reduced.

Referring to FIG. 6, FIG. 7, and FIG. 8, in some embodiments, a length of the boss portion 430 ranges from 0.1mm to 1mm, and the length of the boss portion 430 can be understood as a protruding height of the boss portion 430 relative to the connecting portion 420. For example, the specific value of the length of the boss portion 430 may be 0.1mm, 0.5mm, 1mm, or the like, so that a reasonable distance is maintained between the connector attached to the end surface of the boss portion 430 and the protrusion of the welding layer, thereby effectively eliminating jacking and interference effects of the protrusion of the welding layer on the connector. A size of the cross-section of the boss portion 430 gradually decreases from an end of the boss portion 430 close to the connecting portion 420 to an end of the boss portion 430 away from the connecting portion 420, so that the boss portion 430 has a predetermined degree of taper. By enabling the boss portion 430 to have a predetermined degree of taper, on the one hand, demolding of the formed pole 400 in the mold is facilitated, and the boss portion 430 is prevented from forming scratches under the action of the scraping force of the mold; and on the other hand, the pole 400 has a large contact area with a punch of the mold during forming, which can lower abrasion of the punch, further improving consistency of the pole 400 product produced by the mold, and finally improving the quality of the pole 400.

For example, the boss portion 430 may be in a circular truncated cone shape. Obviously, an end of the circular-truncated cone-shaped boss portion 430 with the largest cross-sectional size is directly connected to the connecting portion 420, and the connector is welded to an end of the circular-truncated cone-shaped boss portion 430 having the smallest cross-sectional size. An angle α between a generatrix of the circular-truncated cone-shaped boss portion 430 and a central axis of the boss portion 430 ranges from 5 degrees to 45 degrees. For example, a specific value of the angle α may be 5 degrees, 35 degrees, or 45 degrees. The generatrix can be understood as an intersection line between a longitudinal section of the central axis of the boss portion 430 and an outer side surface of the boss portion 430.

Referring to FIG. 6, FIG. 7, and FIG. 8, in some embodiments, the end cover assembly 10 further includes a sealing member 500. The sealing member 500 is at least partially accommodated in the mounting hole 122 of the lower plastic member 120. The sealing member 500 surrounds the inner sleeve 230 of the upper plastic member 200 and abuts against the cover plate 110 and the fixing member 300. By providing the sealing member 500, a sealing capability of the end cover assembly 10 can be improved. Therefore, external liquid and dust are prevented from invading the battery 20 through the cover plate 110 assembly, and an electrolyte in the battery 20 is also prevented from leaking from the end cover assembly 10.

Given that the occurrence of the step surface 411 between the base portion 410 and the connecting portion 420, in response to the fixing member 300 abutting against the step surface 411, a size of the sealing member 500 after compression is constant. In an exemplary embodiment of the present disclosure, a distance between the first section 412 and the fixing member 300 is denoted as a first size, a thickness size of base ring 210 of the upper plastic member 200 is denoted as a second size, and a thickness size of a part where the cover plate 110 stacks on the base ring 210 is denoted as a third size. The first size, the second size, and the third size form a size chain. Therefore, the size of the compressed sealing member 500 is equal to a value that the first size minus the second size and the third size concurrently. Therefore, the size of the compressed sealing member 500 is only related to the three sizes including the first size, the second size, and the third size, thereby eliminating the influence of other sizes, and reducing the number of sizes involved in the size chain, which can also be understood as lowering influence factors of the size of the compressed sealing member 500. Meanwhile, given that the cover plate 110, the upper plastic member 200, and the pole 400 are each formed through molds, precision of each of the first size, the second size, and the third size can be ensured.

Therefore, by reducing the total number of sizes involved in the size chain that affect the size of the compressed sealing member 500 and ensuring machining precision of each size involved in the size chain, the dependence on the clamp can be reduced or even eliminated, so that the size of the compressed sealing member 500 is kept constant, i.e., stability and consistency of a compression amount of the sealing member 500 are improved, which further ensures the sealing performance of the sealing member 500, thereby enabling sealing reliability of the end cover assembly 10 to be improved.

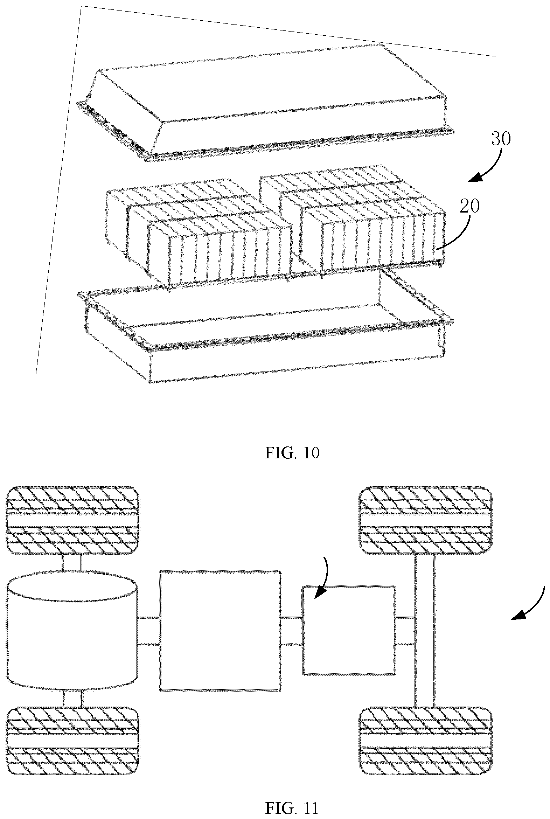

Referring to FIG. 9, FIG. 10, and FIG. 11, the present disclosure further provides a battery 20, an energy storage device 30, and an electric system 40. The battery 20 includes a box body 21, a battery cell, and the end cover assembly 10 described above. The battery cell is accommodated in the box body 21, and the end cover assembly 10 is covered on the box body 21. By providing the end cover assembly 10, reliability of the battery 20 during operation can be improved. The energy storage device 30 includes at least one battery 20. For example, the energy storage device 30 includes multiple batteries 20, so that the energy storage device 30 can be used to store energy. The electric system 40 includes the above energy storage device 30. The energy storage device 30 may be, for example, a battery pack, a battery cluster, an energy storage cabinet, and the like. The electric system 40 includes a load and the energy storage device 30. The energy storage device 30 stores power for the load. The electric system 40 may be, for example, an electric vehicle or the like.

The technical features of the above embodiments can be combined arbitrarily. In order to make the description simple, not every possible combination of the technical features in the above embodiments is described. However, as long as there is no conflict between the combinations of the technical features, any combination of the technical features may be considered as falling in the scope of this specification.

The above embodiments illustrate merely some implementations of the present disclosure. Although description of the above embodiments is specific and detailed, the description may not be construed as limitations on the scope of the present disclosure. It may be pointed out that, various modifications and improvements can be made by those skilled in the art without departing from the concept of the embodiments of the present disclosure, and shall fall within the protection scope of the present disclosure. Therefore, the protection scope of the present disclosure shall be as defined by the claims as attached.

## Claims

1. An end cover assembly (10), comprising:
a top cover unit (100);
a pole (400) penetrating the top cover unit (100), the pole (400) comprising a base portion (410) and a connecting portion (420), the connecting portion (420) protruding from an end surface of the base portion (410) in an axial direction of the base portion (410), and a part of the end surface of the base portion (410) outside a coverage area of the connecting portion (420) is formed as a step surface (411) surrounding the connecting portion (420);
an upper plastic member (200) at least partially sleeved on a peripheral side of the base portion (410), wherein the upper plastic member (200) is partially located at a side of the top cover unit (100) in a thickness direction of the top cover unit (100); and
a fixing member (300) partially located at the other side of the top cover unit (100) in the thickness direction of the top cover unit (100), wherein a seam (310) surrounding the connecting portion (420) is defined between the fixing member (300) and the connecting portion (420), and the step surface (411) is configured to abut against the fixing member (300) and cover the seam (310).

2. The end cover assembly (10) according to claim 1, wherein:
the pole (400) further comprises a boss portion (430) connected to the connecting portion (420) and protruding from an end of the connecting portion (420) away from the base portion (410); and
a cross section of the boss portion (430) perpendicular to an axial direction of the pole (400) is smaller than a cross section of the connecting portion (420) perpendicular to the axial direction of the pole (400).

3. The end cover assembly (10) according to claim 2, wherein the boss portion (430) has a length ranging from 0.1 mm to 1 mm.

4. The end cover assembly (10) according to claim 2, wherein the cross section of the boss portion (430) perpendicular to the axial direction of the pole (400) has a size gradually decreasing in a direction from an end of the boss portion (430) close to the connecting portion (420) to an end of the boss portion (430) away from the connecting portion (420).

5. The end cover assembly (10) according to claim 4, wherein:
the boss portion (430) is in a circular truncated cone shape; and
an angle included between a generatrix of the boss portion (430) and a central axis of the boss portion (430) ranges from 5 degrees to 45 degrees.

6. The end cover assembly (10) according to claim 2, wherein an end surface of the connecting portion (420) close to the boss portion (430) is flush with an end surface of the fixing member (300) close to the boss portion (430) in the axial direction of the pole (400).

7. The end cover assembly (10) according to claim 1, wherein:
the base portion (410) comprises a first section (412) and a second section (413) arranged coaxially, a cross section of the first section (412) perpendicular to an axial direction of the pole (400) being greater than a cross section of the second section (413) perpendicular to the axial direction of the pole (400), and the step surface (411) being located on the second section (413);
the upper plastic member (200) comprises a base ring (210), an outer sleeve (220), and an inner sleeve (230), the inner sleeve (230) and the outer sleeve (220) being arranged at two opposite sides of the base ring (210) in a thickness direction of the base ring (210), the outer sleeve (220) being connected to a peripheral side of the base ring (210), and the inner sleeve (230) being connected to an inner circumference of the base ring (210);
the first section (412) is stacked on the base ring (210) and sleeved in the outer sleeve (220);
the inner sleeve (230) penetrating the top cover unit (100) and being sleeved on a peripheral side of the second section (413); and
the base ring (210) and the top cover unit (100) are stacked on each other.

8. The end cover assembly (10) according to claim 7, further comprising a sealing member (500), wherein:
the top cover unit (100) comprises a cover plate (110) and a lower plastic member (120);
the cover plate (110) is flanked by the lower plastic member (120) and the base ring (210);
the fixing member (300) is stacked on a side of the lower plastic member(120) away from the cover plate (110) in a thickness direction of the lower plastic member (120);
the lower plastic member (120) has a mounting hole (122) defined therein;
the sealing member (500) is at least partially accommodated in the mounting hole (122); and
the sealing member (500) is arranged to surround the inner sleeve (230) and abuts against the cover plate (110) and the fixing member (300).

9. The end cover assembly (10) according to claim 7, wherein:
the top cover unit (100) defines a first counter bore (111) and a second counter bore (121) respectively recessed in two opposite surfaces of the top cover unit (100) in the thickness direction of the top cover unit (100);
the base ring (210) is engaged with the first counter bore (111); and
the fixing member (300) is engaged with the second counter bore (121).

10. The end cover assembly (10) according to claim 1, wherein the upper plastic member (200) has an outer chamfer (231) located at an end of the upper plastic member (200) close to the connecting portion (420), the outer chamfer (231) having an angle ranging from 10 degrees to 45 degrees.

11. The end cover assembly (10) according to claims 8, wherein an aperture of the mounting hole (122) is greater than an outer diameter of the inner sleeve (230).

12. The end cover assembly (10) according to claims 8, wherein the cover plate (110) has a first counter bore (111) and a through hole (112) defined therein, the first counter bore (111) and the through hole (112) being coaxially arranged and in communication with each other.

13. A battery (20), comprising the end cover assembly according to any one of claims 1 to 12.

14. An energy storage device (30), comprising at least one battery according to claim 13.

15. An electric system (40), comprising the energy storage device according to claim 14.
